(19) **Europäisches Patentamt / European Patent Office / Office européen des brevets**

(11) **EP 1 821 478 B1**

(12) **EUROPEAN PATENT SPECIFICATION**

(45) Date of publication and mention of the grant of the patent:
**19.05.2010 Bulletin 2010/20**

(51) Int Cl.:
*H04L 27/26* (2006.01)     *H04L 1/00* (2006.01)
*H04L 1/04* (2006.01)     *H04L 5/02* (2006.01)

(21) Application number: **07102365.9**

(22) Date of filing: **14.02.2007**

(54) **Method and system for transmitting data in a communication system**

Verfahren und System zur Datenübertragung in einem Kommunikationssystem

Procédé et système pour la transmission de données dans un système de communication

(84) Designated Contracting States:
**DE FR GB IT SE**

(30) Priority: **17.02.2006 KR 20060015550**

(43) Date of publication of application:
**22.08.2007 Bulletin 2007/34**

(73) Proprietors:
• **Samsung Electronics Co., Ltd.**
**Suwon-si, Gyeonggi-do (KR)**
• **Korea Advanced Institute of Science and Technology**
**(KAIST)**
**Daejon (KR)**

(72) Inventors:
• **Kim, Dong-Ho**
**c/o Samsung Electronics Co., Ltd.,**
**Gyeonggi-do (KR)**
• **Kim, Ho-Jin**
**c/o Samsung Electronics Co., Ltd.,**
**Gyeonggi-do (KR)**
• **Cho, Dong-Ho**
**c/o Samsung Electronics Co., Ltd.,**
**Gyeonggi-do (KR)**

• **Kim, Yung-Soo**
**c/o Samsung Electronics Co., Ltd.,**
**Gyeonggi-do (KR)**
• **Kim, Ju-Yeop**
**c/o Samsung Electronics Co., Ltd.,**
**Gyeonggi-do (KR)**
• **Cho, Oh-Hyun**
**c/o Samsung Electronics Co., Ltd.,**
**Gyeonggi-do (KR)**
• **Choi, Sik**
**c/o Samsung Electronics Co., Ltd.,**
**Gyeonggi-do (KR)**
• **Kwon, Tae-Soo**
**c/o Samsung Electronics Co., Ltd.,**
**Gyeonggi-do (KR)**
• **Lee, Ho-Won**
**c/o Samsung Electronics Co., Ltd.,**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 575 234     EP-A- 1 575 326**
**US-A1- 2005 025 039**

**Description**

The present invention relates generally to a communication system, and more particularly to a method and system for transmitting data through efficient resource allocation in a communication system.

Recently, software studies for developing more abundant contents and hardware studies for developing wireless access technology, have been conducted in relation to a communication system. These studies are aimed at providing high-speed high-quality wireless data packet service with a high spectrum efficiency. Hereinafter, the hardware studies will be described.

In wireless communications, deterioration of high-speed high-quality data service is generally caused by the channel environment. For wireless communications, the channel environment is frequently changed due not only to white noise (e.g., Additive White Gaussian Noise (AWGN)), but also to power variation of a received signal caused by a fading phenomenon, shadowing, a Doppler effect caused by movement and frequent velocity change of the mobilestation (MS), and interference caused by signals from other users and multi-path signals. Therefore, in order to provide high-speed high-quality data service, a wireless communication system needs to efficiently overcome the foregoing disadvantages. For example, besides the general technologies provided in the conventional 2G and 3G communication systems, a technology capable of increasing the adaptability to a channel change is required. In the conventional communication system, the transmission technologies used for overcoming the disadvantageous factors may be roughly classified into two types: The first is an Adaptive Modulation and Coding (AMC) scheme, and the second is a Hybrid Automatic Repeat Request (HARQ) scheme.

The AMC scheme adaptively changes a modulation scheme and a coding rate of a channel encoder depending on channel variation of a downlink. Generally, Channel Quality Information (CQI) of the downlink can be detected by a receiver of a Mobile Station (MS) by measuring a Signal-to-Noise Ratio (SNR) of a received signal. That is, the MSpredicts a channel state of the downlink based on the CQI of the downlink, and designates a proper modulation scheme and a coding rate of the channel encoder according to the predicted value.

In detail, the MS feeds the CQI of the downlink back to a Base Station (BS) through an uplink. Then, the BS estimates a channel state of the downlink by using the CQI of the downlink feedback from the MS. Next, the BS controls its modulation scheme and coding scheme according to the estimated channel state.

The AMC scheme generally applies a high-order modulation scheme and a high coding rate to an MS with a good channel (i.e. an improved channel state), and applies a low-order modulation scheme and a low coding rate to a MS with a bad channel (i.e. a degraded channel state).

Generally, the MS with a good channel may be located near a BS, and the MS with a bad channel may be located at the boundary of a cell. As compared with the conventional schemes based on high-speed power control, the AMC scheme reduces interference signals by increasing adaptability to the time-varying characteristic of the channel, thereby improving average system performance. As for the HARQ scheme, when there is an error in an initially transmitted data packet, retransmission is requested to compensate the packet in which the error occurs. The HARQ scheme refers to a link control scheme used for such retransmission. The HARQ scheme may be classified into a Chase Combining (CC) scheme, a Full Incremental Redundancy (FIR) scheme and a Partial Incremental Redundancy (PIR) scheme.

According to the CC scheme, the same entire packet transmitted at initial transmission is transmitted when a retransmission is performed. A receiver combines the retransmitted packet with the initially transmitted packet to improve the reliability of coded bits input to a decoder, thereby acquiring an entire system performance gain. When two same data packets are combined, a coding effect similar to that of iterative coding occurs, so that an average performance gain of about 3dB is obtained.

According to the FIR scheme, a packet including only redundant bits generated from a channel encoder, instead of the same packet, is retransmitted, thereby improving the coding gain of a decoder in a receiving terminal. That is, the decoder uses new redundancy bits as well as initially transmitted information during decoding, resulting in an increase in coding gain, thereby contributing to performance improvement. The fact that a performance gain obtained by a low coding rate is greater than that obtained by iterative coding has been widely known through the coding theory. Therefore, considering only a performance gain, the FIR scheme provides superior performance to that of the CC scheme.

The PIR scheme, unlike the FIR scheme, transmits a data packet including information bits and new redundancy bits in combination during retransmission. Accordingly, the information bits are combined with initially transmitted information bits during decoding, thereby providing an effect similar to that of the CC scheme. Further, because the PIR scheme uses redundancy bits for decoding, it is similar to the FIR scheme in effect. Because the PIR scheme is relatively higher than the FIR scheme in coding rate, it generally has an intermediate performance gain between the FIR scheme and the CC scheme. However, because the HARQ scheme must consider system complexity, such as a buffer size of a receiver and signaling, as well as the performance gain, it is difficult to select an appropriate scheme.

As described above, the AMC scheme and the HARQ scheme are independent technologies to increase the adaptability to a channel change. It is expected that a system performance may be greatly improved when the AMC and HARQ schemes are combined and used. That is, when a modulation scheme and a coding rate of an encoder, which are adaptable to a situation of a downlink channel, are determined by the AMC scheme, a data packet corresponding to the determined factors is transmitted.

However, even the use of the AMC scheme and the HARQ scheme cannot basically resolve a shortage problem of radio resources in wireless communication. That is, in order to maximize subscriber capacity and to enable high-speed data transmission necessary for multimedia service, it is necessary to develop a new Multiple Access scheme having an excellent spectrum efficiency.

EP-A-1 575 236 discloses a method for allocating a band Adaptive Modulation and Coding (AMC) channel in a wireless communication system that divides a full frequency band into a plurality of subcarrier bands and includes subchannels, each of which is a set of a predetermined number of neighbor subcarrier bands. Upon recognizing a need for a band AMC channel, a subscriber station sends a request for allocation of the band AMC channel to a base station. Upon receiving the band AMC channel allocation request, the base station determines if it can allocate the band AMC channel requested by the subscriber station, considering a resource situation of the base station, and transmits information on the determination to the subscriber station.

EP US 2005/025039 A1 suggests a two-dimensional subchannel assigning method and apparatus in a time-frequency domain where a plurality of subcarriers are arranged along a time domain with a plurality of symbols and along a frequency domain with a plurality of subbands in an OFDM communication system. The plurality of subcarriers are divided into a plurality of frequency bands and the frequency bands are grouped into the subbands. A plurality of groups are generated by dividing each of the subbands in the frequency domain by the number of the symbols in the time domain. Subcarriers selected from the respective groups in each of the subbands are assigned as an AMC subchannel to which an AMC scheme is applied.

It is the object of the present invention to enable an improved band allocation and data transmission in a communication system.

The object is solved by the subject matter of the independent claims.

Preferred embodiments of the present invention are defined by the dependent claims.

Accordingly, the present invention has been made to solve the above-mentioned problems occurring in the prior art, and an aspect of the present invention is to provide a method and system for transmitting data in a communication system.

Another aspect of the present invention is to provide a data transmission method and system capable of preventing the waste of resources due to the use of a band AMC scheme in a communication system.

Still another aspect of the present invention is to provide a data transmission method and system capable of simultaneously and adaptively using a band AMC scheme and a diversity scheme in a communication system.

Still another aspect of the present invention is to provide a method and system for data transmission in a communication system, which can achieve optimized use of resources and throughput improvement through adaptive use of the band AMC scheme and diversity scheme.

To accomplish these aspects, in accordance with the present invention, there is provided a method for transmitting data in a communication system. The method includes allocating, by a Base Station (BS), bands unused in a band Adaptive-Modulation-and-Coding (band AMC) scheme to Mobile Stations (MSs) of a diversity scheme, and transmitting data by adaptively using the band AMC scheme and the diversity scheme; and identifying, by an MS, resources allocated to the MS, and transmitting data by using either the band AMC scheme or the diversity scheme according to a result of the identifying.

In accordance with the present invention, there is provided a method for transmitting data in a communication system. The method includes identifying, by a Base Station (BS), information of bands to be allocated to each of Mobile Stations (MSs); determining bands used in a band Adaptive-Modulation-and-Coding (band AMC) scheme; allocating bands unused by the band AMC scheme to MSs of a diversity scheme; and transmitting allocation information of the band AMC scheme and diversity scheme to each of the MSs.

In accordance with the present invention, there is provided a method for transmitting data in a communication system. The method includes determining, by a Mobile station (MS), whether a band Adaptive-Modulation-and-Coding (band AMC) scheme or a diversity scheme is used when receives map information from a Base Station (BS); transmitting data by using map information of the MS when uses the band AMC scheme; identifying information of bands unused by the band AMC scheme when uses the diversity scheme; identifying a number of bands unused by the band AMC scheme; identifying a diversity pattern to be used by the MS corresponding to the identified number of the bands unused; and transmitting data by using the diversity pattern and the map information of the MS.

In accordance with the present invention, there is provided a system for transmitting data in a communication system. The system includes a Base Station (BS) for allocating bands unused in a band Adaptive-Modulation-and-Coding (band AMC) scheme to Mobile Stations (MSs) of a diversity scheme, and transmitting data by adaptively using the band AMC scheme and the diversity scheme; and an MS for identifying resources allocated from the BS, and transmitting data by using either the band AMC scheme or the diversity scheme according to a result of the identifying.

## BRIEF DESCRIPTION OF THE DRAWINGS

The above and other aspects, features and advantages of the present invention will be more apparent from the following detailed description taken in conjunction with the accompanying drawings, in which:

FIG. 1 illustrates resource allocation for data transmission in a communication system;
FIG. 2 illustrates the distribution of users using a band AMC scheme in a communication system;
FIGs. 3A and 3B illustrate resource allocation for data transmission in a communication system according to an embodiment of the present invention;
FIG. 4 illustrates the structure of a frame in a communication system according to an embodiment of the present invention;
FIG. 5 illustrates an operation procedure of a BS in a communication system according to an embodiment of the present invention;
FIG. 6 illustrates an operation procedure of an MS in a communication system according to an embodiment of the present invention; and
FIG. 7 illustrates data throughput performance in a communication system according to an embodiment of the present invention.

## DETAILED DESCRIPTION OF THE PREFERRED EMBODIMENT

Hereinafter, a preferred embodiment of the present invention will be described with reference to the accompanying drawings. In the following description, a detailed description of known functions and configurations incorporated herein will be omitted for the sake of clarity and conciseness.

Terms and words used in the specification and the claims should be interpreted not in a manner limited to a dictionary meaning, but to include meanings and concepts conforming with technical aspects of the present invention. Accordingly, it should be understood that various modifications could be made to the preferred embodiment of the present invention.

The present invention provides a method and system for transmitting data in a communication system which uses a band Adaptive Modulation and Coding (AMC) scheme and a diversity scheme. The following embodiment discloses a data transmission method and system which uses a resource scheduling to improve data throughput through dynamic use of the band AMC scheme and diversity scheme. According to the present invention, resources unused by the band AMC scheme are diverted to and used by the diversity scheme, so that the waste of resources is prevented, thereby maximizing the use of resources. In addition, disclosed is a method and system which adaptively transmits data using the band AMC scheme and diversity scheme, and transmits data in a partial diversity scheme using bands not used by the band AMC scheme. In other words, bands may be wasted when many bands allocated to the band AMC scheme are transmitted without data therein due to the complex triggering conditions of the band AMC scheme. In this case, according to the present invention, the resources to be wasted are diverted to the diversity scheme and are then transmitted, so that all bands are used and data are transmitted with a maximum throughout. Thus it is possible to prevent an inter-cell interference fluctuation and to predict interference between adjacent cells.

In addition, the present invention provides a data transmission method and system for efficient utilization of resources by adaptively using the band AMC scheme and diversity scheme based on an Orthogonal Frequency Division Multiplexing (OFDM) scheme. Although the following description will be made with respect to a communication system supporting multiple access based on the OFDM scheme, the data transmission method and system disclosed in the present invention can be applied to other communication systems.

Generally, in order to provide high-speed wireless multimedia service, a communication system needs wideband spectrum resources. However, use of wideband spectrum resources increases a fading effect on a radio link due to multi-path propagation, and causes a frequency selective fading effect even within a transmission band. Therefore, for high-speed wireless multimedia service, the OFDM scheme being robust against frequency selective fading has a higher gain than a Code Division Multiple Access (CDMA) scheme, so recently, studies of the OFDM scheme are actively progressing.

The OFDM scheme has a high spectrum efficiency because spectrums of subchannels overlap each other while maintaining mutual orthogonality. In the OFDM scheme, modulation is achieved by Inverse Fast Fourier Transform (IFFT) and demodulation is achieved by Fast Fourier Transform (FFT).

As a Multiple Access scheme to which the OFDM scheme is applied, there is provided an Orthogonal Frequency Division Multiple Access (OFDMA) scheme in which some of subcarriers are assigned to a particular user, i.e., to a particular Mobile Station (MS). The OFDMA scheme does not require a spreading sequence for band spreading. The OFDMA can dynamically change a set of subcarriers assigned to a particular user according to a fading characteristic of a radio link, which is generally called a "dynamic resource allocation" or "frequency hopping."

According to the band AMC scheme, when resources are allocated to a K number of users, i.e., a K number of MSs, adjacent subcarriers are divided into a predetermined group and are allocated to a corresponding user.

In detail, each MS transmits channel information corresponding to each sub-band, which contains a predetermined number of subcarriers, to a Base Station (BS). Then, the BS allocates the MS a sub-band which includes the best channel for the MS based on the channel information feedback from the MS. In this case, channels included in the sub-band have channel values similar to each other, so that the MS can apply an AMC scheme suitable for the channels. However, in the case of using the band AMC scheme, as the user is moving faster, the reliability of the channel information feedback from the MS decreases. Therefore, the band AMC scheme is not suitable for the users moving at a high speed.

In the band AMC scheme, it is preferable that a plurality of subcarriers necessary for transmitting data for one MS are adjacent to each other. This is because when frequency selectivity occurs in a frequency domain due to a multi-path wireless channel, the adjacent subcarriers are similar to each other in the strength of a channel response, but the subcarriers spaced apart from each other may be greatly different in the strength of the channel response. In addition, because the band AMC scheme maximizes the system capacity by gathering subcarriers with a good channel response and transmitting data through the subcarriers, it is preferable to have a structure capable of gathering a plurality of adjacent subcarriers with a good channel response and transmitting data using the gathered subcarriers.

The band AMC scheme is suitable for transmission of data transmitted to a particular user. This is because it is not preferable that a channel, for example, a broadcast channel or a common control information channel, transmitted to a plurality of users is adapted to the channel state of a certain user. In addition, the band AMC scheme is appropriate for transmission of traffic which is less susceptible to delay. This is because the band AMC scheme basically selects MSs in a good channel state and then transmits data to only the selected MSs, so for delay-sensitive traffic, for example, real-time traffic such as Voice-over-Internet-Phone (VoIP) or video meetings, the corresponding user cannot continue to wait until the channel state improves. In other words, for the users receiving real-time traffic service, it is necessary to transmit data to the corresponding users even in the bad channel state in order to guarantee a minimum amount of delay. As to the diversity scheme, generally a wireless channel variously changes in the time domain. Even in the frequency domain, the channel environment is variable, that is, has a good state in one band and a bad state in another band, and such a phenomenon is repeated. In this channel environment, when data transmission cannot be adapted to the channel for a particular user, a phenomenon in which each MS sometimes receives the transmitted data in a good channel state and sometimes receives the transmitted data in a bad channel state occurs.

The diversity scheme is appropriate for such wireless environments or traffic. The diversity scheme aims at allowing the transmitted data to uniformly experience good channels and bad channels as much as possible. That is, according to the diversity scheme, when an MS receives transmitted data, e.g., one specific data packet in a bad channel state, it is difficult to successfully decode the received packet, and in terms of the reception performance, when modulated symbols included in one packet include some symbols having experienced bad channels and other symbols having experienced good channels, the MS can demodulate the packet using the latter symbols.

The diversity scheme changes subcarriers, through which data symbols will be transmitted, for every OFDM symbol or every predetermined unit, in order to maximize the diversity effect. This technique is called "frequency hopping", and most communication systems employing the diversity scheme use the frequency hopping technique.

As described above, the band AMC and diversity schemes, used to overcome the fading phenomenon in the communication system, are opposite to each other not only in their characteristics, but also in traffic types suitable for the use of the schemes. Accordingly, a communications system capable of using the two schemes together adaptively to the system and communication environments, rather than using only one of the schemes is required. Therefore, the present invention discloses a method and system capable of transmitting data by using the band AMC and diversity schemes together so as to adaptively use resources based on various channel environments.

Meanwhile, a communication system (OFDM/OFDMA communication system) employing the OFDM/OFDMA scheme as described above generally uses Frequency Reuse Factor (FRF) 1. Since the OFDM/OFDMA communication system uses FRF 1, adjacent cells or BSs controlling the cells use the same frequency band, so that it is possible to flexibly design the OFDM/OFDMA communication system in the manner of communication systems employing the CDMA scheme. In this case, the OFDM/OFDMA communication system uses the concept of diversity subchannelization that uniformly lowers interference between adjacent cells through interference averaging. Accordingly, low AMC levels are applied to broadcasting channels, and AMC levels optimized for channel environments according to each user are applied to user bursts to be transmitted, thereby guaranteeing the entire system performance.

In addition, since the OFDM communication system can allocate resources to only one user in one symbol section, there is a limitation in terms of granularity representing a minimum unit for resource allocation. In contrast, the OFDMA communication system can allocate resources in two dimensions of a frequency axis for subchannels and a time axis of symbols, the OFDMA communication system has an advantage in terms of granularity. That is, the OFDMA communication system is preferable in providing realtime service (e.g., VoIP service) requiring a small resources per transmission.

The channels of the OFDMA communication system are divided into a diversity channel including subcarriers distributed over the entire frequency band and a band AMC channel including adjacent subcarriers. That is, the OFDMA communication system provides a standard that improves system performance by selectively applying the diversity channel and the band AMC channel within the same framework according to channel states of the MS.

The diversity channel is a basic mode, and is generally used when the MS moves at a high speed. In this case, since the state of a channel changes depending on time, the diversity channel uses a subchannel including subcarriers distributed over the entire carrier band, and uses a scheme of offsetting interference between adjacent BSs on an average, thereby simultaneously obtaining the frequency diversity and time diversity.

In contrast, when the mobility of an MS is small and a channel is stable, a band AMC channel which includes adjacent subcarriers having an excellent channel characteristic is used by utilizing frequency selectivity showing an excellent channel characteristic in a specific frequency band, for the purpose of increasing a transmission speed. Therefore, the band AMC channel is preferable when an MS moves at a high speed.

Hereinafter, a data transmission method according the band AMC scheme will be described with reference to the accompanying drawings.

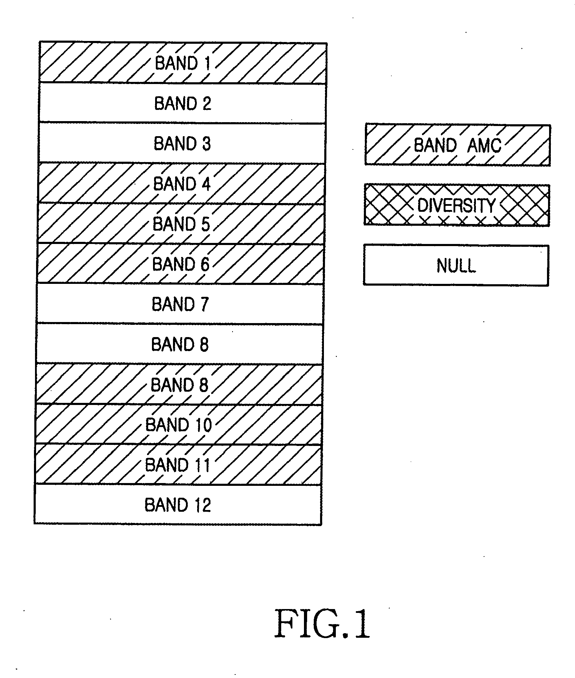

FIG. 1 illustrates resource allocation for data transmission in a communication system.

Generally, according to a communication system employing the band AMC scheme, the entire frequency band is divided, for example, into an N number of bands (e.g., band 1 to band 12), each of which includes a group of subcarriers, resources are allocated according to each band, and data are transmitted using the allocated resources. That is, according to the band AMC scheme of the communication system, there are a plurality of AMC bands, and AMC operations are independently performed according to each band. Therefore, each MS feeds back Channel Quality Information (CQI) according to each sub-band, and the BS receives CQI according to each band fed back from each MS, performs a scheduling operation for each band, and transmits user data according to each band.

As described above, triggering conditions of the band AMC scheme have been proposed. That is, the band AMC triggering conditions in a communication system are as follows. First, a maximum standard deviation of Carrier-to-Interference-and-Noise-Ratios (CINRs) of bands must be less than a band AMC allocation threshold. Second, the average CINR of the entire bands must be greater than a band AMC allocation timer.

As described above, the band AMC scheme uses such complex triggering conditions. However, there are not many users, i.e., MSs, to satisfy the band AMC triggering conditions in a communication system. In contrast, when the triggering conditions are simplified, there is a problem in that it is impossible to express the band AMC performance. The requisites of the user for satisfying the band AMC triggering conditions may be expressed as shown in Table 1.

Table 1

| User | Requisite |
|---|---|
| User within cell | High average CINR, Low inter-cell interference |
| Low-speed user | Exact channel reporting must be possible |
| Small multi-path fading | Low frequency selectivity in band |

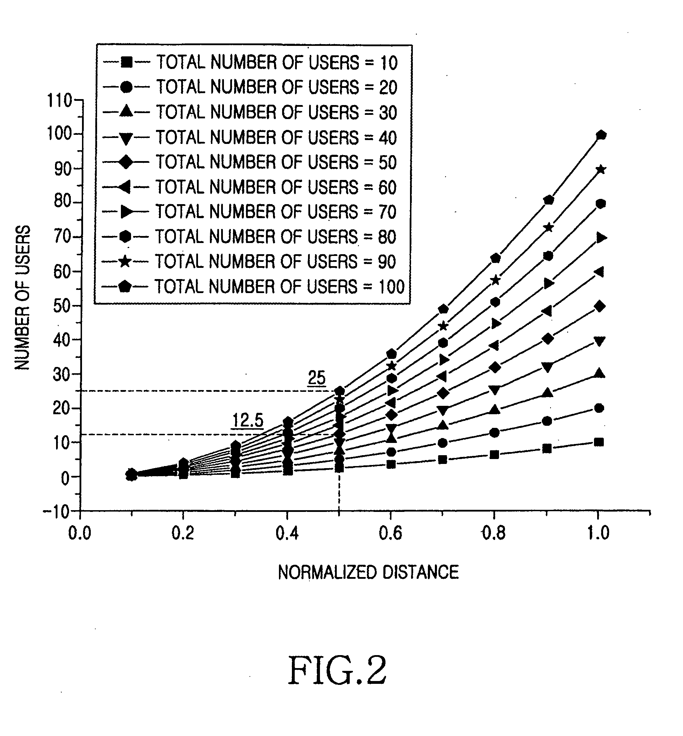

The following description will be given about users within a cell in Table 1 with reference to FIG. 2.

FIG. 2 illustrates the distribution of users using the band AMC scheme in a communication system. In detail, FIG. 2 illustrates the user requisites for satisfying the band AMC triggering conditions in the case of users with in a cell.

Referring to FIG. 2, when it is assumed that there are a total of 50 users, approximately 12.5 users are located within a normalized distance of 0.5. Also, when it is assumed that there are a total of 100 users, approximately 25 users are located within a normalized distance of 0.5.

These are values obtained in consideration of general environments. In actual environments, the band AMC scheme may be applied when the user moves at a slow speed while satisfying the band AMC triggering conditions. In addition, it can be estimated that among the users located within the normalized distance of 0.5, users who satisfy the requisites described in Table 1, for example, who move at a low speed to have a small frequency selectivity are minimal in number. Therefore, it can be understood that in actual environments, there are minimal users of the band AMC scheme.

When the band AMC triggering conditions are strict, there are few users of the band AMC scheme. Thus, multiple bands allocated to apply the band AMC scheme are not filled and are transmitted in an empty state with no data loaded therein, thereby causing a waste of resources. Also, in the existing communication system, although there is no user of the band AMC scheme, resources allocated to the band AMC scheme cannot be used by the diversity scheme.

In contrast, when the band AMC triggering conditions are loose, there may be many users of the band AMC scheme. However, in actual environments, it is difficult to obtain an actual gain of the band AMC scheme when the band AMC triggering conditions are loose. For example, channel reporting is inexact and an average CINR is low. Therefore, when the band AMC triggering conditions are loose, using the band AMC scheme is meaningless, and actually, the performance of the band AMC scheme is degraded.

In addition, all bands may not be used by the band AMC scheme, for example, because there are only a few users of the band AMC scheme. Also, although there may be many users of the band AMC scheme, all bands may not be used when bands desired by the users overlap. In these cases, if the bands are forcibly filled, using the band AMC scheme is meaningless, and performance is degraded.

Meanwhile, when there are many users using the band AMC scheme, and the level of a Modulation-and-Coding Scheme (MCS) is low, it may be that the MCS levels of some bands have low values so that all bands can be used in data transmission. However, this may be only a large overhead, because the band AMC scheme requires map information for each user in order to allocate resources. Therefore, in this case, if the same MCS level is used at all, it is more efficient to use the diversity scheme.

As described above, a large number of bands may be transmitted with no data loaded therein due to the complex triggering conditions of the band AMC scheme, so that a large portion of the resources allocated by the band AMC scheme are wasted. According to the present invention, resources to be wasted as described above are utilized by the diversity scheme, thereby maximizing data throughput. That is, according to the present invention, data are transmitted by the diversity scheme using bands which are not used in the communication system.

According to the present invention described later, data throughput is maximized through dynamic use of the band AMC and diversity schemes. Also, according to the present invention, all bands are used, thereby preventing inter-cell interference fluctuation and predicting interference between adjacent cells. That is, according to the present invention bands to be used by the band AMC scheme are first determined, the remaining bands having not been used by the band AMC scheme are allocated to users of the diversity scheme, thereby adaptively using the band AMC scheme and diversity scheme.

Hereinafter, the operations according to the present invention will be described with reference to the accompanying drawings. The data transmission method and system capable of preventing the waste of resources by adaptively using the band AMC scheme and diversity scheme according to the present invention will now be described.

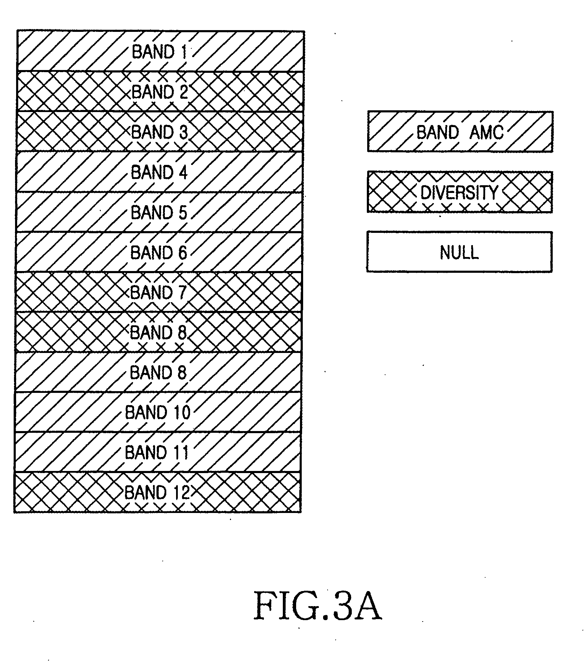

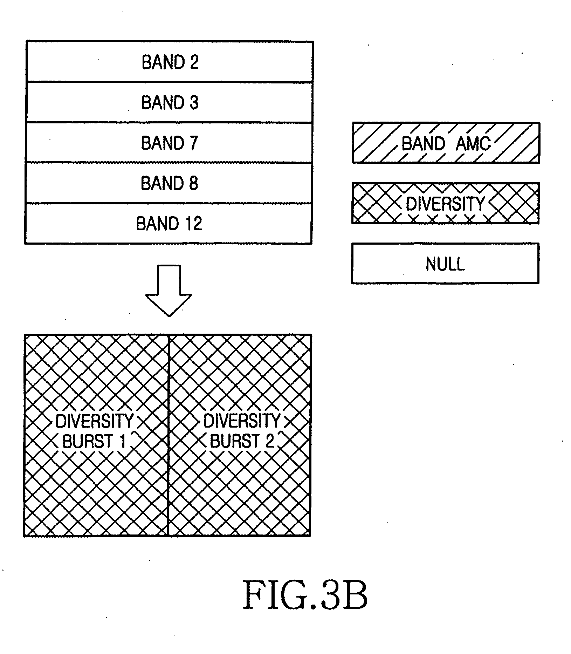

FIGs. 3A and 3B illustrate resource allocation for data transmission in a communication system according to the present invention.

According to the present invention, bands, which have been used by the band AMC scheme in the resource allocation of the communication system, for example, as shown in FIG. 1, are allocated to users of the diversity scheme. For example, as shown in FIG. 3A, bands (i.e., band 1, band 4 to band 6, and band 9 to band 11) used by the band AMC scheme are allocated to users of the band AMC scheme, bands (i.e., band 2, band 3, band 7, band 8 and band 12) having not been used by the band AMC scheme are allocated to users of the diversity scheme, and data are transmitted using the allocated bands.

Herein, all bands may not be used by the band AMC scheme, when users of the band AMC scheme are a few in number, or when bands desired by users of the band AMC scheme overlap although the users are many in number, as described above. In these cases, the data transmission method and system according to the present invention uses bands, which have not been used by the band AMC scheme, in a partial diversity scheme, thereby preventing the waste of resources, improving data throughput and acquiring an additional diversity gain.

According to the present invention, schemes for diverting bands having not been used by the band AMC scheme to the diversity scheme, as described above, may be classified into the following two categories: A Nulling-and-Hopping scheme as shown in FIG. 3A and a No-nulling-and-Diversity scheme as shown in FIG. 3B.

According to the Nulling-and-Hopping scheme, when a BS transmits bands, information is not loaded in the subcarriers of bands used by the band AMC scheme, but is loaded only in the subcarriers of unused bands. Then, in decoding in an MS, the subcarriers included in the bands used by the band AMC scheme are not considered. According to the Nulling-and-Hopping scheme, the remaining bands are used to independently perform transmission of the diversity scheme.

Referring to FIG. 3B, predetermined patterns are used according to the number of remaining bands. For example, a pre-appointed pattern is used for the maximum number of bands according to the communication system setup when there is at least one unused band. That is, when the number of unused bands is identified, a predetermined pattern corresponding to the identified number is used.

Herein, the remaining bands may be transmitted by the diversity scheme by using, for example, a hopping pattern, a Costas sequence or a diversity sequence. As described above, the present invention can be applied regardless of used diversity schemes.

Also, the remaining bands may be used by employing patterns predetermined based on the number of remaining bands, as described above. For example, it may be assumed that there are "n" number of bands, and diversity patterns for one to "n" bands are predetermined. In this case, when "m" number of bands are used by the band AMC scheme, diversity patterns for "n-m" number of bands are used. As described above, when the number of bands used by the band AMC scheme has been determined, a diversity pattern corresponding to the number of remaining bands is used. Herein, it is preferable that since the numbers of bands used according to each frame are different, different diversity patterns depending on frames are applied.

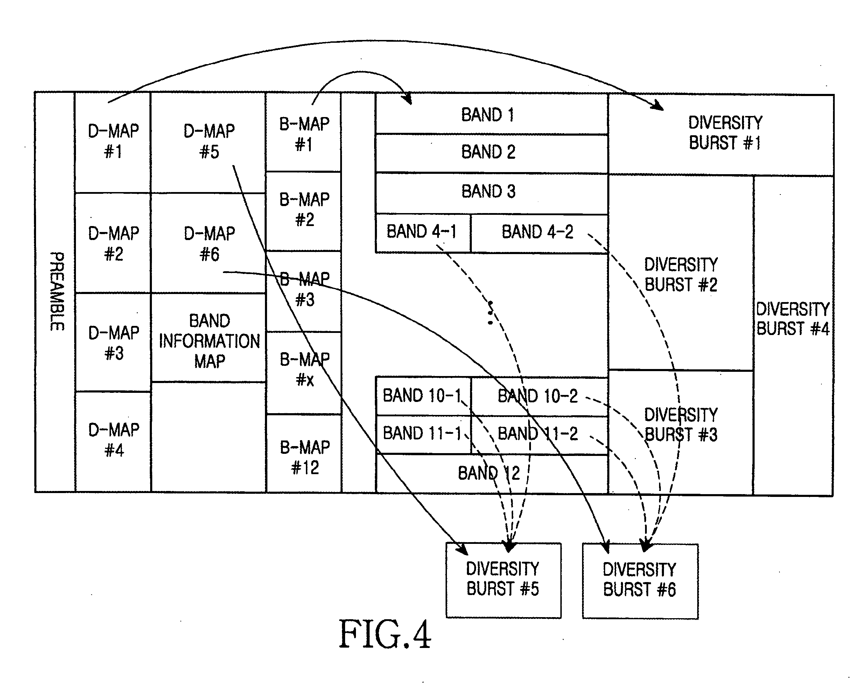

FIG. 4 illustrates the structure of a frame in a communication system according to the present invention.

The frame according to the present invention includes a Band AMC map (B-map) for reporting the position of a corresponding burst of bands used by the band AMC scheme, a band AMC information map for reporting information about bands unused by the band AMC scheme, and a Diversity map (D-map) for reporting the position of a corresponding burst so that the bands unused by the band AMC scheme can be used by the diversity scheme.

First, a BS performs a scheduling operation for each band by using channel state information, e.g., CQI, fed back from each MS. That is, the BS identifies information about bands to be allocated as resources to each MS, and determines bands to be used by the band AMC scheme. Thereafter, bands unused by the band AMC scheme are determined as bands used by the diversity scheme. That is, the BS allocates the bands unused by the band AMC scheme to a user of the diversity scheme.

In this case, the BS may construct resource allocation information by means of the map, as described above. For example, information about the unused bands may be reported through the band AMC information map, and information about the positions of bursts in the diversity scheme may be reported through the diversity map.

Such a frame structure is only a preferred embodiment of the present invention and various frame structures may be constructed according to systems. For example, the frame may be constructed without the band MAP information map. When there is no band AMC information map, as described above, a separate construction for the user to identify information about unused bands may be made. Also, it should be clearly understood that information about the unused bands may be defined in the form of a message and reported.

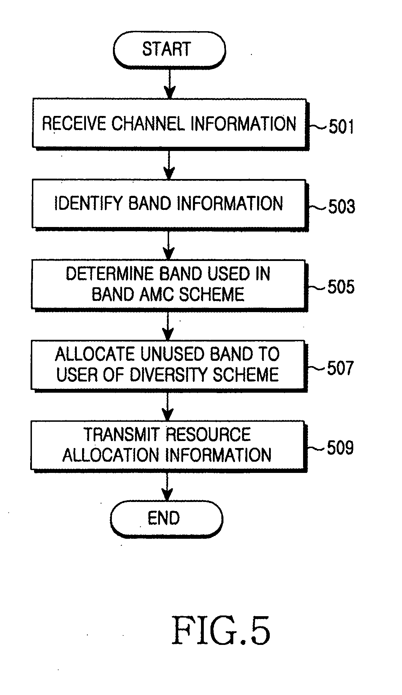

FIG. 5 is a flowchart illustrating an operation procedure of a BS in a communication system according to the present invention.

First, in step 501, a BS receives channel information, e.g., CQI, fed back from each MS, and proceeds to step 503. In step 503, the BS identifies information about bands allocated as resources to each MS, and proceeds to step 505. In step 505, the BS determines bands used by the band AMC scheme, and proceeds to step 507. In step 507, the BS allocates the remaining bands excepting the determined bands, i.e., bands unused by the band AMC scheme, to users of the diversity scheme, and proceeds to step 509. In step 509, the BS transmits resource allocation information as described above, to each MS. In this case, the resource allocation information is transmitted together with information about bands unused by the band AMC scheme and information about the positions of bursts to be used by the diversity scheme.

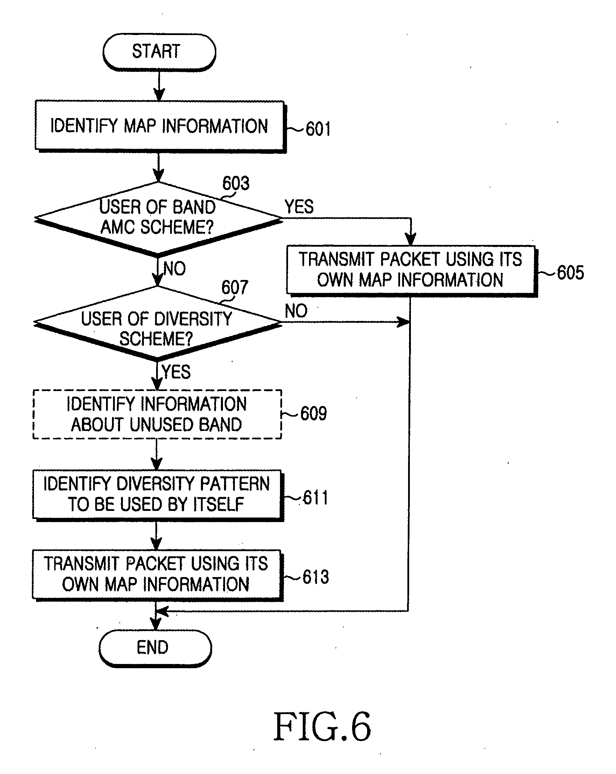

FIG. 6 illustrates an operation procedure of an MS in a communication system according to the present invention.

First, in step 601, a MS receives map information from a BS, identifies the received map information, and proceeds to step 603. Then, the MS determines its own current state, e.g., whether the MS is using the band AMC scheme or the diversity scheme.

That is, in step 603, the MS determines whether the MS uses the band AMC scheme. When it is determined that the MS is using the band AMC scheme, as a result of step 603, the MS proceeds to step 605 to transmit a packet by using its own map information.

In contrast, when it is determined that the MS does not use the band AMC scheme, as a result of step 603, the MS proceeds to step 607 to determine whether the MS itself uses the diversity scheme. When it is determined that the MS itself does not use the diversity scheme, as a result of step 607, the MS ends the procedure without performing any operation.

In contrast, when it is determined that the MS uses the diversity scheme, as a result of step 607, the MS proceeds to step 609. In step 609, the MS identifies information about bands unused by the band AMC scheme, and proceeds to step 611. Herein, step 609 may be omitted if a band AMC information map is transmitted from the BS to the MS. That is, when a band AMC information map exists, the information about bands unused by the band AMC scheme can be identified through the map, so it is possible to omit an information identification step such as step 609.

That is, the MS identifies bands unused by the band AMC scheme through the band AMC information map, as described above. Meanwhile, when there is no information about bands unused by the band AMC scheme, the MS decodes all band AMC maps to identify information about bands unused by the band AMC scheme, as described above.

When the MS identifies the number of bands unused by the band AMC scheme through step 609 or through the band AMC information map, the MS identifies a diversity pattern to be used by the MS based on the number of unused bands in step 611. Thereafter, the MS proceeds to step 613, in which the MS transmits packets according to the diversity pattern by using its own map information.

Herein, when using bands unused by the band AMC scheme, the MS may utilize for example, the existing hopping pattern, the Costas sequence or the diversity sequence. Also, it is preferable that when the diversity pattern is utilized, diversity patterns corresponding to the numbers of bands unused by the band AMC scheme may be preset.

As described above, in the conventional communication system, there are many bands unused by the band AMC scheme due to the complex triggering conditions of the band AMC scheme, thereby causing a waste of resources. Also, ) in the conventional communication system, there is no solution for diverting resources, which have been allocated by the band AMC scheme, to the diversity scheme. In contrast, according the present invention as described above, bands unused by the band AMC scheme are diverted to the diversity scheme, thereby obtaining an additional diversity gain. Also, according to the present invention, the band AMC scheme and the diversity scheme are adaptively used, thereby maximizing the efficiency of resource use and data throughput. In addition, according to the present invention, bands unused by the band AMC scheme are used by the diversity scheme, thereby improving data throughput.

In other words, the communication system according to the present ) invention adaptively uses the band AMC scheme and the diversity scheme, thereby maximizing data throughput through optimized resource usage, and preventing the waste of resources, which occurs when only the band AMC scheme is used. Hereinafter, the characteristics of the present invention will be described in comparison with the conventional method.

As described above, according to the present invention, bands unused by the band AMC scheme are used by the diversity scheme, thereby improving data throughput. For example, first, when five bands have not been used by the band AMC scheme,

- band AMC scheme: 3 bands (16QAM 3/4) + 4 bands (16QAM 1/2)
- diversity scheme : 5 bands (QPSK 1/2)
- conventional method

$$230.4\,kbps\,(16\,QAM\,3/4)\,*3+153.6\,kbps\,(16\,QAM\,1/2)\,*4=1304.8\,kbps$$

- method proposed in the present invention

$$230.4\,kbps\,(16\,QAM\,3/4)\,*3+153.6\,kbps\,(16\,QAM\,1/2)\,*4$$
$$+76.8\,kbps\,(QPSK\,1/2)\,*5=1688.8\,kbps$$

In this case, the method according to the present invention can improve data throughput by approximately 29% as compared with the conventional method.

Next, when three bands have not been used by the band AMC scheme,

- band AMC scheme: 3 bands (16QAM 3/4) + 4 bands (16QAM 1/2) + 2bands(QPSK 1/2)
- diversity scheme : 3 bands (QPSK 3/4)
- conventional method

$$230.4\,kbps\,(16\,QAM\,3/4)\,*3+153.6\,kbps\,(16\,QAM\,1/2)\,*4$$
$$+76.8\,kbps\,(QPSK\,1/2)\,*2=1458\,kbps$$

- method proposed in the present invention

$$230.4\,kbps\,(16\,QAM\,3/4)\,*3+153.6\,kbps\,(16\,QAM\,1/2)\,*4$$
$$+76.8\,kbps\,(QPSK\,1/2)\,*2+115.2\,kbps\,(QPSK\,3/4)\,*3=1803.6\,kbps$$

In this case, the method according to the present invention can improve data throughput by approximately 24% as compared with the conventional method.

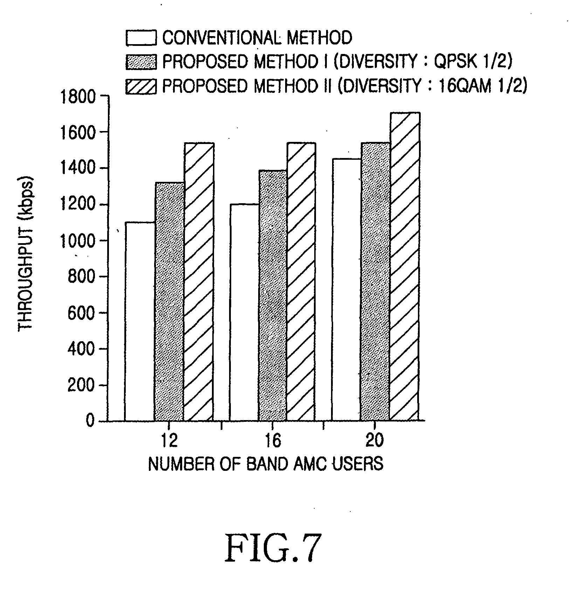

FIG. 7 illustrates data throughput performance in a communication system according to an embodiment of the present invention. In FIG. 7, it is assumed that the total number of users is 80, there are 20 users in a cell within a normalized distance of 0.5, and the rate of users moving at a low speed are 60/80/100% : 12/16/20.

According to the present invention, bands unused by the band AMC scheme are used by the diversity scheme, so that it is possible to save map resources of the band AMC scheme. Also, with respect to the 60/80/100, the numbers of bands used by the diversity scheme are 5/4/3, respectively. Thus, the method of the present invention can improve data throughput as compared with the conventional method.

As described above, the system and method according to the present invention adaptively use the band AMC scheme and the diversity scheme in a communication system, so that optimized use of resources is achieved, thereby maximizing data throughput. Also, according to the present invention, it is possible to prevent the waste of resources, which occurs when only the band AMC scheme is used in a communication system. Furthermore, according to the present invention, the band AMC scheme and diversity scheme are efficiently used in a communication system, thereby improving compatibility of the system. In addition, according to the present invention, it is possible to use resources that were previously unused and the band AMC scheme and diversity scheme are dynamically used in a communication system, thereby improving data throughput, and predicting inter-cell interference of a band AMC band in adjacent cells.

While the present invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiment but by the appended claims.

**Claims**

1. A method for a base station, BS, for allocating bands to mobile stations, MSs, in a communication system, the method comprising:

    receiving (501) channel state information from the MSs;
    identifying (503) information of bands to be allocated to each MSs;
    determining (505) bands to be currently used in a band Adaptive-Modulation-and-Coding, AMC, scheme;
    allocating (507) bands currently unused by the band AMC scheme to MSs of a diversity scheme; and
    transmitting (509) allocation information of the band AMC scheme and the diversity scheme to each of the MSs.

2. The method as claimed in claim 1, wherein the step of allocating (507) the bands comprises allocating the bands unused by the band AMC scheme in a partial diversity scheme.

3. The method as claimed in claim 1, wherein the allocation information includes information of the bands unused by the band AMC scheme.

4. The method as claimed in claim 3, wherein the information of the bands unused by the band AMC scheme is included in a band AMC information map.

5. The method as claimed in claim 1, wherein the allocation information includes information about positions of bursts through which the data are transmitted by the diversity scheme.

6. A method for a mobile station, MS, for transmitting data in a communication system, the method comprising:

    receiving, from a base station, allocation information of a band Adaptive-Modulation-and-Coding, AMC, scheme and a diversity scheme;
    determining (603) whether the band AMC scheme or the diversity scheme is currently used; and

    when it is determined that the diversity scheme is currently used, then:

    identifying a number of bands currently unused by the band AMC scheme;
    identifying (611) a diversity pattern to be used by the MS corresponding to the identified number of the bands unused; and
    transmitting (613) data by using the identified diversity pattern and the allocation information.

7. The method as claimed in claim 6, further comprising transmitting data by using allocation information of the MS when it is determined that the band AMC scheme is used.

8. The method as claimed in claim 6, further comprising identifying (609) information of bands unused by the band AMC scheme when it is determined that the diversity scheme is used.

9. The method as claimed in claim 8, wherein identifying (609) the information of the bands unused by the band AMC scheme comprises identifying the information through a band AMC information map .

10. The method as claimed in claim 8, wherein identifying (609) the information of the bands unused by the band AMC scheme comprises identifying the information through decoding of all band AMC maps.

11. The method as claimed in claim 6, wherein the step of transmitting (613) data by using the diversity pattern comprises transmitting the data by using a corresponding diversity pattern preset according to the number of bands unused by the band AMC scheme.

12. The method as claimed in claim 6, wherein the step of transmitting (613) data by using the diversity pattern comprises transmitting the data by using at least one selected from the group consisting of a hopping pattern, a Costas sequence and a diversity sequence.

13. The method as claimed in claim 6, wherein the step of transmitting (613) data by using the diversity pattern comprises transmitting the data by using a partial diversity scheme for the bands unused by the band AMC scheme.

14. A base station for allocating bands to mobile stations in a communication system comprising the base station and the mobile station, wherein the base station is configured to perform the method of one of claims 1 to 5.

15. A mobile station for transmitting data in a communication system, wherein the mobile station is configured to perform the method of one of claims 6 to 13.

**Patentansprüche**

1. Verfahren für eine Basisstation, BS, Mobilstationen, MS, in einem Kommunikationssystem Bänder zuzuweisen, wobei das Verfahren umfasst:

   Empfangen (501) von Kanalstatusinformationen von den MS;
   Identifizieren (503) von Informationen von Bändern, die den einzelnen MS zugewiesen werden sollen;
   Bestimmen (505) von aktuell in einem Bandschema für adaptive Modulation und Kodierung (Adaptive-Modulation-and-Coding, AMC-Bandschema) verwendeten Bändern;
   Zuweisen (507) von aktuell von dem AMC-Bandschema ungenutzten Bändern zu MS eines Diversitätsschemas; und
   Senden (509) der Zuweisungsinformationen des AMC-Bandschemas und des Diversitätsschemas an die einzelnen MS.

2. Verfahren nach Anspruch 1, wobei der Schritt des Zuweisens (507) der Bänder das Zuweisen der von dem AMC-Bandschema ungenutzten Bänder in einem Teil-Diversitätsschema umfasst.

3. Verfahren nach Anspruch 1, wobei die Zuweisungsinformationen Informationen der von dem AMC-Bandschema ungenutzten Bänder beinhalten.

4. Verfahren nach Anspruch 3, wobei die Informationen der von dem AMC-Bandschema ungenutzten Bänder in einer AMC-Band-Informationskarte enthalten sind.

5. Verfahren nach Anspruch 1, wobei die Zuweisungsinformationen Informationen über Burst-Positionen enthalten, durch die die Daten vom Diversitätsschema übertragen werden.

6. Verfahren für eine Mobilstation, MS, Daten in einem Kommunikationssystem zu senden, wobei das Verfahren umfasst:

   Empfangen von Zuweisungsinformationen eines Bandschemas für adaptive Modulation und Kodierung (Adaptive-Modulation-and-Coding, AMC-Bandschema) und eines Diversitätsschemas von einer Basisstation;
   Bestimmen (603), ob aktuell das AMC-Bandschema oder das Diversitätsschema genutzt wird; und
   bei Bestimmen, dass aktuell das Diversitätsschema genutzt wird, dann: Identifizieren einer Anzahl von aktuell von dem AMC-Bandschema ungenutzten Bändern; Identifizieren (611) eines von der MS zu nutzenden Diversitätsmusters entsprechend der identifizierten Anzahl an ungenutzten Bändern; und
   Senden (613) von Daten unter Verwendung des identifizierten Diversitätsmusters und der Zuweisungsinformationen.

7. Verfahren nach Anspruch 6, das weiterhin das Senden von Daten unter Verwendung der Zuweisungsinformationen der MS umfasst, wenn bestimmt wird, dass das AMC-Bandschema genutzt wird.

**8.** Verfahren nach Anspruch 6, das weiterhin das Identifizieren (609) von Informationen über vom AMC-Bandschema ungenutzte Bänder umfasst, wenn bestimmt wird, dass das Diversitätsschema genutzt wird.

**9.** Verfahren nach Anspruch 8, wobei das Identifizieren (609) der Informationen über von dem AMC-Bandschema ungenutzte Bänder das Identifizieren der Informationen durch eine AMC-Band-Informationskarte umfasst.

**10.** Verfahren nach Anspruch 8, wobei das Identifizieren (609) der Informationen über die von dem AMC-Bandschema ungenutzten Bänder das Identifizieren der Informationen durch Dekodieren aller AMC-Band-Karten umfasst.

**11.** Verfahren nach Anspruch 6, wobei der Schritt des Sendens (613) von Daten unter Verwendung des Diversitätsmusters das Senden der Daten unter Verwendung eines korrespondierenden Diversitätsmusters umfasst, das entsprechend der Anzahl der von dem AMC-Bandschema ungenutzten Bänder voreingestellt ist.

**12.** Verfahren nach Anspruch 6, wobei der Schritt des Sendens (613) von Daten unter Verwendung des Diversitätsmusters das Senden der Daten unter Verwendung von mindestens einem Muster umfasst, das aus der Gruppe ausgewählt wird, die aus einem Sprungmuster, einer Costas-Sequenz und einer Diversitätssequenz ausgewählt wird.

**13.** Verfahren nach Anspruch 6, wobei der Schritt des Sendens (613) von Daten unter Verwendung des Diversitätsmusters das Senden der Daten unter Verwendung eines Teil-Diversitätsschemas für die von dem AMC-Bandschema ungenutzten Bänder umfasst.

**14.** Basisstation zum Zuweisen von Bändern zu Mobilstationen in einem Kommunikationssystem, das die Basisstation und die Mobilstation umfasst, wobei die Basisstation dazu konfiguriert ist, das Verfahren nach einem der Ansprüche 1 bis 5 durchzuführen.

**15.** Mobilstation zum Senden von Daten in einem Kommunikationssystem, wobei die Mobilstation dazu konfiguriert ist, das Verfahren nach einem der Ansprüche 6 bis 13 durchzuführen.

**Revendications**

**1.** Procédé de station de base, soit BS ou Base Station, pour l'attribution de bandes à des stations mobiles, soit MS ou Mobile Station, dans un système de communication, le procédé comprenant :

la réception (501) d'informations d'état de canal des MS ;
l'identification (503) d'informations concernant les bandes à attribuer à chacune des MS ;
la détermination (505) de bandes devant être couramment utilisées dans un schéma de modulation et codage adaptatifs de bande, soit AMC ou Adaptive-Modulation-and-Coding ;
l'attribution (507) de bandes couramment inutilisées par le schéma AMC de bande aux MS d'un schéma de diversité ; et
la transmission (509) d'informations d'attribution du schéma AMC de bande et du schéma de diversité à chacune des MS.

**2.** Procédé selon la revendication 1, dans lequel l'étape d'attribution (507) des bandes comprend l'attribution des bandes inutilisées par le schéma AMC de bande selon un schéma de diversité partiel.

**3.** Procédé selon la revendication 1, dans lequel les informations d'attribution comprennent des informations concernant les bandes inutilisées par le schéma AMC de bande.

**4.** Procédé selon la revendication 3, dans lequel les informations concernant les bandes inutilisées par le schéma AMC de bande sont incluses dans une carte d'informations AMC de bande.

**5.** Procédé selon la revendication 1, dans lequel les informations d'attribution comprennent des informations concernant des positions de rafales via lesquelles les données sont transmises par le schéma de diversité.

**6.** Procédé pour station mobile, soit MS, destiné à transmettre des données dans un système de communication, le procédé comprenant :

la réception, depuis une station de base, d'informations d'attribution d'un schéma de modulation et codage adaptatifs de bande, soit AMC, et d'un schéma de diversité ;

la détermination (603) du fait que le schéma AMC de bande ou le schéma de diversité est couramment utilisé ou non ; et

lorsqu'il est déterminé que le schéma de diversité est couramment utilisé :

l'identification d'un nombre de bandes couramment inutilisées par le schéma AMC de bande ;

l'identification (611) d'un motif de diversité à utiliser par la station MS correspondant au nombre identifié de bandes inutilisées ; et

la transmission (613) de données en utilisant le motif de diversité identifié et les informations d'attribution.

7. Procédé selon la revendication 6, comprenant en outre la transmission de données en utilisant des informations d'attribution de la station MS lorsqu'il est déterminé que le schéma AMC de bande est utilisé.

8. Procédé selon la revendication 6, comprenant en outre l'identification (609) d'informations concernant les bandes inutilisées par le schéma AMC de bande lorsqu'il est déterminé que le schéma de diversité est utilisé.

9. Procédé selon la revendication 8, dans lequel l'identification (609) des informations concernant les bandes inutilisées par le schéma AMC de bande comprend l'identification des informations via une carte d'informations AMC de bande.

10. Procédé selon la revendication 8, dans lequel l'identification (609) des informations concernant les bandes inutilisées par le schéma AMC de bande comprend l'identification des informations via le décodage de toutes les cartes AMC de bande.

11. Procédé selon la revendication 6, dans lequel l'étape de transmission de données (613) en utilisant le motif de diversité comprend la transmission des données en utilisant un motif de diversité correspondant, préréglé conformément au nombre de bandes inutilisées par le schéma AMC de bande.

12. Procédé selon la revendication 6, dans lequel l'étape de transmission de données (613) en utilisant le motif de diversité comprend la transmission des données en utilisant au moins un élément sélectionné parmi le groupe comprenant un motif de sauts, une séquence de Costas et une séquence de diversité.

13. Procédé selon la revendication 6, dans lequel l'étape de transmission de données (613) en utilisant le motif de diversité comprend la transmission des données en utilisant un schéma de diversité partiel pour les bandes inutilisées par le schéma AMC de bande.

14. Station de base pour l'attribution de bandes à des stations mobiles dans un système de communication comprenant la station de base et la station mobile, dans lequel la station de base est configurée pour mettre en oeuvre le procédé selon l'une des revendications 1 à 5.

15. Station mobile destinée à transmettre des données dans un système de communication, dans lequel la station mobile est configurée pour mettre en oeuvre le procédé selon l'une des revendications 6 à 13.

FIG.1

FIG.2

| BAND 1 |
|---|
| BAND 2 |
| BAND 3 |
| BAND 4 |
| BAND 5 |
| BAND 6 |
| BAND 7 |
| BAND 8 |
| BAND 8 |
| BAND 10 |
| BAND 11 |
| BAND 12 |

| BAND AMC |
|---|
| DIVERSITY |
| NULL |

# FIG.3A

| BAND 2 |
|--------|
| BAND 3 |
| BAND 7 |
| BAND 8 |
| BAND 12 |

| //// BAND AMC //// |
|---------|
| DIVERSITY |
| NULL |

| DIVERSITY BURST 1 | DIVERSITY BURST 2 |
|---|---|

# FIG.3B

FIG.4

START

RECEIVE CHANNEL INFORMATION ~501

IDENTIFY BAND INFORMATION ~503

DETERMINE BAND USED IN
BAND AMC SCHEME ~505

ALLOCATE UNUSED BAND TO
USER OF DIVERSITY SCHEME ~507

TRANSMIT RESOURCE
ALLOCATION INFORMATION ~509

END

FIG.5

START

IDENTIFY MAP INFORMATION ~601

603
USER OF BAND
AMC SCHEME? ──YES──→ TRANSMIT PACKET USING ITS
OWN MAP INFORMATION ~605

NO

607
USER OF DIVERSITY
SCHEME? ──NO──→

YES

IDENTIFY INFORMATION
ABOUT UNUSED BAND ~609

IDENTIFY DIVERSITY PATTERN
TO BE USED BY ITSELF ~611

TRANSMIT PACKET USING ITS
OWN MAP INFORMATION ~613

END

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1575236 A
- US 2005025039 A1